# EUROPÄISCHE PATENTSCHRIFT

(11) **EP 0 912 144 B1**
(45) Veröffentlichungstag und Bekanntmachung des Hinweises auf die Patenterteilung: **14.01.2009**
(21) Anmeldenummer: 98919193.7
(22) Anmeldetag: 31.03.1998
(51) Int. Cl.: A61C 13/08

(54) **KOLLEKTION KÜNSTLICHER FRONTZÄHNE**
COLLECTION OF ARTIFICIAL FRONT TEETH
COLLECTION DE DENTS FRONTALES ARTIFICIELLES

(30) Priorität: 07.04.1997 DE 19714282
(43) Veröffentlichungstag der Anmeldung: 06.05.1999
(60) Teilanmeldung: 06023153.7
(73) Patentinhaber: Merz Dental GmbH, 24321 Lütjenburg (DE)
(72) Erfinder: DZIURON, Peter, D-24321 Lütjenburg (DE); FIRLA, Markus, D-49205 Hasbergen-Gaste (DE)
(74) Vertreter: Kunz, Herbert
(86) Internationale Anmeldenummer: PCT/EP1998/001859
(87) Internationale Veröffentlichungsnummer: WO 1998/044866

(56) Entgegenhaltungen:
- CA-A- 2 100 009
- US-A- 1 338 068
- US-A- 2 449 435

## Beschreibung

Das Bemühen, der Vielfalt der natürlichen Zahnformen möglichst nahe zu kommen, hat dazu geführt, dass die auf dem Markt befindlichen Kollektionen künstlicher Frontzähne eine sehr große Anzahl von einzelnen Zahnformen umfassen. Dies ist nicht nur aufwendig in der Herstellung und Vorratshaltung, sondern erschwert wegen der Unübersichtlichkeit der unterschiedlichen Typen auch die Auswahl. Auch die für diese Kollektionen gewählten Typisierungen befriedigen nicht. Es handelt sich zum einen um eine an die Kretzmarsche Konstitutionstypeneinteilung angelehnte Typisierung, die Entsprechungen zwischen der Zahnform und den athletischen, pyknischen und leptosomen Konstitutionstypen zu finden meint, sowie zum anderen um die Anknüpfung an geometrische Figuren wie Dreieck, Rechteck, Schaufelform, Quadrat, Oval, die sich in der vielfältigen natürlichen Zahnform nur schwer wiederfinden lassen.

Die Erfindung schafft ein Verfahren zur Bestimmung bzw. Einteilung einer Kollektion künstlicher Zähne, die an bestimmte Zahnabmessungen anknüpft, die leicht ausgemessen werden können, aber auch der Beurteilung durch den geschulten Blick leicht zugänglich sind. Die erfindungsgemäße Kollektion künstlicher Frontzähne umfasst in jeder wesentlichen Größenklasse drei Formengruppen, die sich durch die Verhältnisse der mesio-distalen Breiten ihrer Vestibulärflächen in deren zervikalem, mittlerem und inzisalem Längendrittel unterscheiden. In einer zervikal betonten Gruppe sind die mesio-distalen Breiten in allen Längendritteln etwa gleich. Das heißt, dass sie sich um nicht mehr als 10%, vorzugsweise 5%, voneinander unterscheiden. In einer mittenbetonten Gruppe ist die Breite des Zahns im mittleren Drittel größer als in den beiden anderen Dritteln, und zwar ist sie mindestens um den Faktor 1,15, vorzugsweise 1,2, größer als die Breite im zervikalen Drittel. In einer inzisal betonten Gruppe ist die Breite im inzisalen Drittel größer als in den beiden anderen Dritteln, und zwar um den Faktor 1,18, vorzugsweise 1,24, größer als die Breite im zervikalen Drittel.

Die Frontzähne sind die Schneidezähne. Die Vestibulärflächen werden hinsichtlich der erfindungsgemäßen Breitenmessung begrenzt durch ihre Randleisten. Diese sind optisch ohne weiteres erkennbar. Die der Breitenmessung zugrundeliegenden Grenzlinien werden definiert durch die Linien stärkster Krümmung (geringsten Krümmungsradius in der horizontalen Schnittebene). Die Breite ist nicht linear, sondern der gekrümmten Oberfläche folgend zu messen, und zwar entlang derjenigen Linie, die zwei jeweils auf gleicher Höhe befindliche Punkte der beiden Grenzlinien auf kürzestem Wege verbindet.

Die Längendrittel werden durch Drittelung der Länge der Vestibulärflächen zwischen der Schneidekante und dem zervikalen Rand des Schmelzes gemessen entlang ihrer Mittellinie ermittelt. Gemessen wird in jedem Drittel an der Stelle größter Breite. Diese kann mit einer Grenzlinie des Drittels zusammenfallen.

Die Erfindung bezieht sich ausschließlich auf künstliche Zähne im eigentlichen Sinne, d. h. maschinell hergestellte Frontzähne, die den Formen menschlicher Frontzähne vollanatomisch angenähert sind und zum Ersatz von zahnlosen Kieferbereichen im Rahmen der prothetischen Versorgung mittels Total- und Teilprothese sowie Implantatsuprakonstruktion dienen. Sie bezieht sich nicht auf Kronen.

Die Erfindung wird im folgenden näher unter Bezugnahme auf die Zeichnung erläutert. Darin zeigen:
- Fig. 1: die Vestibulärfläche eines Zahns mit Angabe der Messpunkte und Aufteilungslinien und
- Fig. 2 bis 4: drei unterschiedliche Zahntypen.

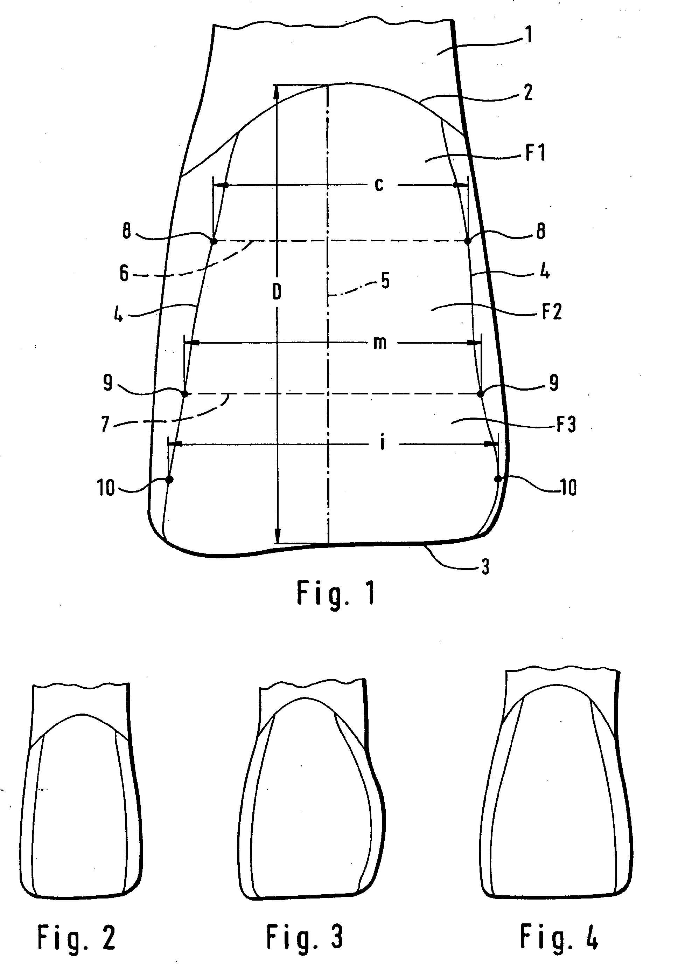

In Fig. 1, die einen oberen Schneidezahn zeigt, erkennt man den Zahnhals 1, die Schmelz-Zement-Grenze 2 des Schmelzes, die Schneidkante 3 sowie die Vestibulärränder 4, die durch die Linien des jeweils kleinsten Krümmungsradius in lotrecht zur Zahnachse verlaufenden Ebenen bestimmt sind. Die Linie 5 stellt die Mittellinie der so begrenzten Vestibulärfläche dar. Ihre Länge zwischen dem Schmelzrand 2 und der Schneidkante 3 ist in drei gleiche Abschnitte unterteilt, deren Grenzen 6, 7 lotrecht zur Zahnachse gezogen sind. Sie trennen das zervikale Längendrittel F1 von dem mittleren Längendrittel F2 und dieses schließlich von dem inzisalen Längendrittel F3.

In jedem dieser Abschnitte wird die größte mesio-distale Breite ermittelt. Im dargestellten Beispiel (Fig. 1) liegt diese im inzisalen Längendrittel F3 in der Linie 10. Zwischen deren Endpunkten 10 ist die Breitenmessung vorzunehmen. Entsprechendes gilt für das mittlere Längendrittel, in welchem die größte mesiodistale Breite zwischen den Messpunkten 9 festgestellt wird. Im zervikalen Längendrittel F1 findet die Messung zwischen den Punkten 8 statt. Die im zervikalen Drittel gemessene, größte Breite wird mit dem Symbol "c", die in mittleren Längendrittel mit dem Symbol "m" und die im inzisalen Längendrittel mit dem Symbol "i" bezeichnet.

Bei der Ausmessung einer Vielzahl natürlicher Zähne stellte sich heraus, dass man mit dem Kriterium des Breitenvergleichs in den drei Längendritteln zu einer besonders einfachen und übersichtlichen Typisierung und zu einer Kollektion künstlicher Zähne kommt, die den notwendigen Typenbereich mit einer verhältnismäßig geringen Zahl von unterschiedlichen Zahnformen abdeckt, sofern die diese Typen repräsentierenden Zahngruppen so charakterisiert und voneinander abgegrenzt werden, wie dies oben und in den Ansprüchen angegeben ist.

Die Gruppe der zervikal betonten Zähne zeichnet sich danach dadurch aus, dass c, m und i etwa gleich sind bzw. sich um nicht mehr als 10%, vorzugsweise 5%, voneinander unterscheiden. Ein Beispiel zeigt Fig. 2.

Die mittenbetonte Gruppe, die in Fig. 3 beispielhaft repräsentiert ist, zeichnet sich dadurch aus, dass eine gedrungene Körperform den Eindruck bestimmt. Sie wird deswegen auch als bodybetont bezeichnet. Ihre größte mesio-distale Breite liegt im mittleren Längendrittel. Diese ist größer als im inzisalen Drittel und beträchtlich größer (nämlich mindestens um den Faktor 1,15, vorzugsweise 1,2) als die größte Breite des zervikalen Längendrittels.

Die inzisal betonte Gruppe, die durch Fig. 4 repräsentiert ist, zeigt ihre größte Breite im inzisalen Längendrittel. Sie ist dort größer als im mittleren Längendrittel und beträchtlich größer (nämlich mindestens um den Faktor 1,18, vorzugsweise 1,24) als im zervikalen Längendrittel.

Diese Dreiergruppierung findet sich in der erfindungsgemäßen Kollektion für jede maßgebende Größenklasse, von denen zweckmäßigerweise mindestens drei vorgesehen werden, die mit I, M und S bezeichnet werden. Vorzugsweise ist sie auch in ergänzenden Größenklassen vorgesehen; jedoch ist dies nicht unbedingt erforderlich.

Die folgende Tabelle gibt für die Größenklasse "L" (Large) die entsprechenden Breiten in den unterschiedlichen Längendritteln an. Die Buchstaben "C", "B" und "I" stehen für die zervikal, Body- und inzisal betonten Gruppen. Außer den maximalen mesio-distalen Distanzen auf der Vestibuläroberfläche werden die jeweiligen Höhen "D" der Vestibulärflächen angegeben.

| **Oberkiefer** | | | | | |
|---|---|---|---|---|---|
| Maximale mesio/distale Distanz auf der Vestibuläroberfläche in mm | | | | | |
| | | F1 | F2 | F3 | D |
| Zahn 11 | CL | 9,0 | 9,0 | 9,1 | 11,1 |
| Zahn 21 | CL | 8,3 | 8,3 | 8,3 | 11,0 |
| Zahn 11 | BL | 7,8 | 9,4 | 9,2 | 11,6 |
| Zahn 21 | BL | 7,2 | 9,2 | 8,2 | 11,7 |
| Zahn 11 | IL | 7,6 | 8,3 | 8,7 | 11,7 |
| Zahn 21 | IL | 7,0 | 8,0 | 9,0 | 11,6 |
| Zahn 12 | CL | 7,9 | 7,8 | 7,8 | 10,1 |
| Zahn 22 | CL | 7,7 | 7,8 | 7,8 | 10,0 |
| Zahn 12 | BL | 5,8 | 7,8 | 6,8 | 10,4 |
| Zahn 22 | BL | 5,6 | 7,2 | 7,0 | 10,3 |
| Zahn 12 | IL | 5,9 | 7,1 | 7,4 | 10,3 |
| Zahn 22 | IL | 5,8 | 7,2 | 7,5 | 10,4 |
| Zahn 13 | CL | 9,1 | 9,1 | 9,1 | 12,5 |
| Zahn 23 | CL | 9,8 | 9,7 | 9,6 | 12,3 |

| **Oberkiefer** | | | | | |
|---|---|---|---|---|---|
| Maximale mesio/distale Distanz auf der Vestibuläroberfläche in mm | | | | | |
| | | F1 | F2 | F3 | D |
| Zahn 13 | BL | 8,0 | 8,8 | 8,8 | 12,8 |
| Zahn 23 | BL | 7,8 | 9,4 | 9,2 | 12,0 |
| Zahn 13 | IL | 7,2 | 9,3 | 9,5 | 12,3 |
| Zahn 23 | IL | 7,5 | 9,4 | 9,5 | 12,0 |

| **Unterkiefer** | | | | | |
|---|---|---|---|---|---|
| Maximale mesio/distale Distanz auf der Vestibuläroberfläche in mm | | | | | |
| | | F1 | F2 | F3 | D |
| Zahn 31 | CL | 7,3 | 7,1 | 6,9 | 9,0 |
| Zahn 41 | CL | 6,9 | 6,9 | 6,8 | 8,8 |
| Zahn 31 | BL | 6,2 | 7,2 | 7,0 | 8,7 |
| Zahn 41 | BL | 5,6 | 7,0 | 6,2 | 8,8 |
| Zahn 31 | IL | 5,0 | 5,6 | 6,2 | 8,7 |
| Zahn 41 | IL | 5,1 | 5,9 | 6,4 | 8,9 |
| Zahn 32 | CL | 6,0 | 6,0 | 6,0 | 9,3 |
| Zahn 42 | CL | 6,8 | 6,8 | 6,8 | 9,0 |
| Zahn 42 | BL | 6,1 | 7,7 | 7,4 | 10,0 |
| Zahn 32 | BL | 5,9 | 7,5 | 7,3 | 9,7 |
| Zahn 32 | IL | 5,2 | 6,1 | 6,5 | 9,8 |
| Zahn 42 | IL | 5,1 | 6,3 | 6,5 | 9,9 |
| Zahn 33 | CL | 7,5 | 7,4 | 7,4 | 11,0 |
| Zahn 43 | CL | 8,0 | 7,7 | 7,5 | 10,7 |
| Zahn 33 | BL | 7,0 | 8,8 | 7,8 | 10,7 |
| Zahn 43 | BL | 7,0 | 8,6 | 8,0 | 10,4 |
| Zahn 33 | IL | 7,5 | 8,2 | 9,5 | 12,2 |
| Zahn 43 | IL | 7,5 | 9,0 | 9,3 | 12,5 |

Die folgende Tabelle gibt ein Zahlenbeispiel für einen oberen zervikal betonten Schneidezahn in drei Größenklassen:

| Maximale mesio/distale Distanz auf der Vestibuläroberfläche in mm | | | | | |
|---|---|---|---|---|---|
| | | F1 | F2 | F3 | D |
| Zahn 21 | CL | 8,3 | 8,3 | 8,3 | 11,1 |
| Zahn 21 | CM | 8,0 | 7,9 | 7,9 | 10,6 |
| Zahn 21 | CS | 7,5 | 7,5 | 7,4 | 10,0 |

## Patentansprüche

1. Verfahren zur Bestimmung einer Kollektion künstlicher aus Schneidezähnen bestehender Frontzähne, wobei die Kollektion drei Größenklassen aufweist, wobei in jeder Größenklasse genau drei Formengruppen vorgesehen sind, wobei
a) eine Längendrittelung an dem Frontzahn in ein zervikales (c), mittleres (m) und inzisales (i) Längendrittel vorgenommen wird und die Längendrittelung durch Drittelung der Länge der Vestibuläroberflächen zwischen der Schneidekante und dem zervikalen Rand des Schmelzes des Frontzahnes ermittelt wird;
b) wobei in jedem Längendrittel eine Breitenmessung vorgenommen wird und
c) die Breitenmessung durch Messung der Breite als Distanz auf der Vestibuläroberfläche zwischen zwei Punkten vorgenommen wird, die durch Grenzlinien festgelegt werden, welche durch die Linie stärkster Krümmung definiert werden, und die so ermittelten zwei Punkte auf kürzestem Weg entlang der Vestibuläroberfläche miteinander verbindet; und
d) die Zuordnung der ausgemessenen Frontzähne in die Formengruppen erfolgt, aus denen jeweils ein Zahn in der Kollektion vorhanden ist, und die sich durch die Verhältnisse der nach dem Schritt c) festgelegten Breiten (c,m,i) ihrer Vestibuläroberflächen in deren zervikalem (c), mittlerem (m) und inzisalem (i) Längendrittel unterscheiden, nämlich:
eine zervikalbetonte Gruppe, in der c und i sich um nicht mehr als 10% von m unterscheiden,
eine mittenbetonte Gruppe, in der m mindestens um den Faktor a größer als c ist und i nicht größer als m ist,
und eine inzisalbetonte Gruppe, in der i mindestens um den Faktor b größer als c ist und m kleiner als i ist, wobei a gleich 1,15 und b gleich 1,18 ist.

2. Verfahren nach Anspruch 1, **dadurch gekennzeichnet, dass** die jeweils größte gemessene Breite in jedem Längendrittel zugrundegelegt ist.

3. Verfahren nach Anspruch 1, **dadurch gekennzeichnet, dass** die mittlere gemessene Breite in jedem Längendrittel zugrundegelegt ist.

4. Verfahren nach einem der Ansprüche 1 bis 3, **dadurch gekennzeichnet, dass** in der zervikal betonten Gruppe c und i sich um nicht mehr als 5% von m unterscheiden.

5. Verfahren nach einem der Ansprüche 1 bis 4, **dadurch gekennzeichnet, dass** a gleich 1,2 ist.

6. Verfahren nach einem der Ansprüche 1 bis 5, **dadurch gekennzeichnet, dass** b gleich 1,24 ist.

## Claims

1. A method of determining a collection of artificial front teeth consisting of incisors, the collection having three size categories, in each size category precisely three shape groups being provided,
a) a length of the front tooth being divided by three into a cervical (c), middle (m) and incisal (i) third of the length, and the length being divided by three by dividing by three the length of the vestibular surfaces between the cutting edge and the cervical edge of the enamel of the front tooth;
b) in each third of the length a width measurement being taken, and
c) the width measurement being taken by measuring the width as a distance on the vestibular surface between two points which are established by boundary lines which are defined by the line with the greatest curvature, and the two points thus established being connected to one another along the shortest path along the vestibular surface; and
d) the assignment taking place of the front teeth measured into the shape groups, from which one tooth respectively is present in the collection and which are distinguished by the relationships of widths (c, m, i) of their vestibular surfaces established according to step c) in the cervical (c), middle (m) and incisal (i) third of the length of the latter, namely:
a cervically emphasised group in which c and i differ from m by no more than 10%,
a centrally emphasised group in which m is greater than c at least by factor a and i is no greater than m,
and an incisally emphasised group in which i is greater than c at least by factor b, and m is smaller than i, a being equal to 1.15 and b being equal to 1.18.

2. The method according to Claim 1, **characterised in that** the respectively largest width measured is used as the basis in each third of the length.

3. The method according to Claim 1, **characterised in that** the average width measured in each third of the length is used as the basis.

4. The method according to any of Claims 1 to 3, **characterised in that** in the cervically emphasised group c and i differ from m by no more than 5%.

5. The method according to any of Claims 1 to 4, **characterised in that** a is equal to 1.2.

6. The method according to any of Claims 1 to 5, **characterised in that** b is equal to 1.24.

## Revendications

1. Procédé de détermination d'une collection de dents frontales artificielles composée d'incisives, la collection présentant trois ordres de grandeur et chaque ordre de grandeur comprenant exactement trois groupes morphologiques, dans lequel
a) on procède à une division en trois, dans la longueur, de la dent frontale pour former un tiers cervical (c), médian (m) et incisif (i) et la division en trois dans la longueur s'effectue en divisant les surfaces vestibulaires en trois dans la longueur entre le bord coupant et la bordure cervicale de l'émail de la dent frontale ;
b) on effectue une mesure de la largeur dans chaque tiers, et
c) on effectue la mesure de la largeur en mesurant la largeur représentant la distance, sur la surface vestibulaire, séparant deux points établis par des lignes limite qui sont définies par la ligne de plus forte cambrure et reliant l'un à l'autre les deux points ainsi déterminés par la voie la plus courte le long de la surface vestibulaire ; et
d) on effectue le classement des dents frontales mesurées dans les groupes morphologiques, parmi lesquels une dent est respectivement présente dans la collection, et qui se différencient par les rapports entre les largeurs (c, m, i) de leurs surfaces vestibulaires établies selon l'étape c) en leurs tiers cervical (c), médian (m) et incisif (i), à savoir :
un groupe à prédominance cervicale, dans lequel c et i ne diffèrent pas de m de plus de 10 %,
un groupe à prédominance médiane, dans lequel m est supérieur à c selon au moins le facteur a, et i n'est pas supérieur à m,
et un groupe à prédominance incisive, dans lequel i est supérieur à b selon au moins le facteur b, et m est inférieur à i, a valant 1,15 et b valant 1,18.

2. Procédé selon la revendication 1, **caractérisé en ce que**, à chaque fois, la plus grande mesure de la largeur est exploitée dans chaque tiers.

3. Procédé selon la revendication 1, **caractérisé en ce que** la mesure moyenne de la largeur est exploitée dans chaque tiers.

4. Procédé selon l'une des revendications 1 à 3, **caractérisé en ce que** dans le groupe à prédominance cervicale c et i ne diffèrent pas de m de plus de 5 %.

5. Procédé selon l'une des revendications 1 à 4, **caractérisé en ce que** a vaut 1,2.

6. Procédé selon l'une des revendications 1 à 5, **caractérisé en ce que** b vaut 1,24.
